# EUROPEAN PATENT APPLICATION

(11) **EP 0 558 063 A2**
(43) Date of publication of application: **01.09.1993**
(21) Application number: 93103115.7
(22) Date of filing: 26.02.1993
(51) Int. Cl.: B01D 53/34, B01J 20/34, A62D 3/00, B01D 53/08

(54) **Process for thermal decomposition of dioxins at low temperature**

(30) Priority: 28.02.1992 JP 75806/92; 01.06.1992 JP 163360/92
(71) Applicant: SUMITOMO HEAVY INDUSTRIES, LTD, Tokyo 100 (JP)
(72) Inventor: Watanabe, Teruo, Ushiku-shi (JP); Yamamoto, Kazuhiko, Yokohama-shi (JP); Tanaka, Tateo, Tokyo (JP)
(74) Representative: Henkel, Feiler, Hänzel & Partner

(57) **Abstract**

Adsorbed dioxins on an activated carbon or activated cokes are efficiently thermally decomposed by heating the adsorbed activated carbon or activated cokes at a low temperature such as at least 350°C in a reactor filled with the adsorbed activated carbon or activated cokes without combustion of the activated carbon or activated cokes, thereby recycling the desorbed activated carbon or activated carbon for reuse. The adsorbed activated carbon or activated cokes is heated in an oxygen-free state or in an inert atmosphere at an oxygen concentration of not more than 1% by volume in the reactor at least at 350°C for at least one hour, thereby thermally decomposing the adsorbed dioxins and saving wasting of resource such as activated carbon or activated carbon.

During the heat treatment an inert gas for the inert atmosphere or desorbed thermal decomposition product gases are passed in the same flow direction as or in a counterflow direction to the moving direction of the activated carbon or activated cokes.

## Description

### BACKGROUND OF THE INVENTION

### 1) Field of the Invention

The present invention relates to an improvement in a process for thermally decomposing dioxins, and more particularly to an improvement of the conventional process, which comprises adsorbing dioxins (which are abbreviations of polydibenzodioxin chloride and polydibenzofuran chloride as organochlorine compounds) onto activated carbon or activated cokes from a flue gas, and treating the dioxins-adsorbed activated carbon or activated cokes at a high temperature such as about 1,300°C by combustion, etc., thereby thermally decomposing the adsorbed dioxins.

### 2) Prior Art

It is well known to thermally decompose dioxins or dioxins-captured materials such as dioxins-adsorbed materials by exposing them to a very high temperature such as about 1,300°C. However, in the conventional process, energy consumption is very high, because of the treatment at a very high temperature and also wasting of resource is inevitable because the dioxin-captured materials such as dioxin-adsorbed activated carbon or activated cokes are combusted at the same time. In some cases, dioxins are formed again in the course of combustion. Thus, it has been desired to improve the conventional process.

### SUMMARY OF THE INVENTION

An object of the present invention is to provide a process for thermally decomposing dioxins adsorbed on activated carbon or activated cokes by treating it at a low temperature such as 350°C or higher, without combusting the dioxins-adsorbed activated carbon or activated cokes, thereby enabling reuse of the activated carbon or activated cokes.

According to the present invention, the adsorbed dioxins are thermally decomposed at a low temperature by heating the dioxins-adsorbed activated carbon or activated cokes at 350°C or higher in a reactor vessel filled with dioxins-adsorbed activated carbon or activated cokes under an oxygen-free state or an inert gas atmosphere at an oxygen concentration of not more than 1% by volume for at least one hour, thereby preventing excessive energy consumption and wasting of resources such as activated carbon, etc. In case of heating in an inert gas atmosphere, an inert gas can be passed in the same flow direction as the flow direction of activated carbon or activated cokes or in the counterflow direction thereto.

When the heating temperature is below 350°C, no sufficient regeneration of activated carbon or activated cokes can be carried out, and the upper limit of the heating temperature is about 460°C, because when the heating temperature is higher than about 460°C, there is a high possibility of combustion of activated carbon or activated cokes and the apparatus for decomposing adsorbed dioxins must be made from special materials of construction to withstand such a higher heating temperature.

The upper limit of the oxygen concentration, 1% by volume, is selected in the present invention in view of safety based on the following facts: (1) ignition point of activated carbon or activated cokes is about 400°C in the air, (2) it is necessary to heat the dioxins-adsorbed activated carbon or activated cokes to regenerate the activated carbon or activated cokes in an apparatus for decomposing the adsorbed dioxins, and (3) the heating must be carried out at a lower oxygen concentration to avoid combustion of activated carbon or activated cokes in the apparatus. The lower limit of the oxygen concentration is 0% by volume.

The operating pressure of the apparatus for decomposing adsorbed dioxins is the atmospheric pressure or a superatmospheric pressure and usually 50 to 400 mm Aq, and is selected in view of operating conditions of successive apparatuses or the entire process flow. When the operating pressure is a subatmospheric pressure, air is leaked into the apparatus for decomposing the adsorbed dioxins to partially increase the oxygen concentration, resulting in a possibility of combustion of the activated carbon or activated cokes.

### BRIEF DESCRIPTION OF THE DRAWINGS

Fig. 1 is a schematic vertical cross-sectional view of an apparatus for thermal decomposition of adsorbed dioxins while passing an inert gas in the same flow direction as the moving direction of dioxins-adsorbed activated carbon or activated cokes.

Fig. 2 is a schematic vertical cross-sectional view of an apparatus of the same structure as shown in Fig. 1, where only the difference from Fig. 1 is in passing the inert gas in the counterflow direction to the moving direction of dioxins-adsorbed activated carbon or activated cokes.

Fig. 3 is a schematic vertical cross-sectional view of an apparatus for thermal decomposition of adsorbed dioxins in an oxygen-free state in absence of any inert gas, while withdrawing the decomposition product gas from the apparatus in the same direction as the moving direction of dioxins-adsorbed activated carbon or activated cokes, while keeping direct contact with the activated carbon or activated cokes.

Fig. 4 is a schematic cross-sectional view of an apparatus of the same structure as shown in Fig. 3, where a difference from Fig. 3 is in withdrawing the decomposition product gas in the counterflow direction to the moving direction of dioxins-adsorbed activated carbon or activated cokes, while keeping direct contact with the activated carbon.

Fig. 5 shows thermal decomposition steps of dioxine.

### PREFERRED EMBODIMENTS OF THE INVENTION

### Example 1

This example shows that dioxins are thermally decomposed by heating dioxins-adsorbed activated carbon or activated cokes (which will be hereinafter referred to merely as "adsorbed activated carbon") in an inert atmosphere at an oxygen concentration of not more than 1% by volume at a low temperature such as at least 350°C for about one hour or more. By catalytic action of activated carbon or activated cokes, (which will be hereinafter referred to merely as "activated carbon"), the adsorbed dioxines can be thermally decomposed at such a low temperature, and the adsorbed activated carbon can be reutilized with less energy consumption and much saving of resources and also with elimination of chances for forming dioxins again due to a high temperature so far employed in the conventional process.

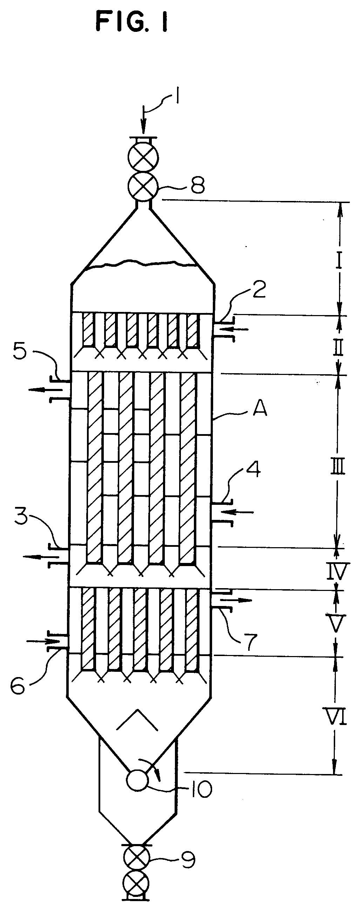

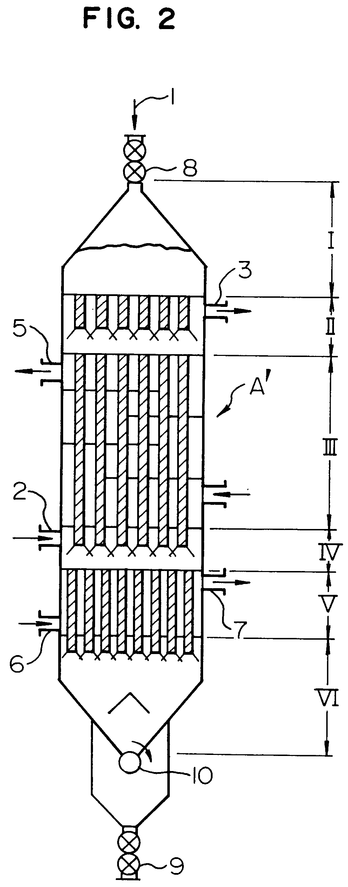

Figs. 1 and 2 show apparatuses for carrying out the present process disclosed in this example, where Fig. 1 shows an apparatus A for decomposing adsorbed dioxins by passing an inert gas in direct contact with the adsorbed activated carbon and in the same flow direction as the moving direction of the adsorbed activated carbon, and Fig. 2 shows an apparatus A' of the same structure as shown in Fig. 1, where only the difference from Fig. 1 is in passing the inert gas in direct contact with the adsorbed active carbon, but in a counterflow direction to the moving direction of the adsorbed activated carbon.

The apparatus A for decomposing adsorbed dioxins shown in Fig. 1 is of a moving bed type as to the adsorbed activated carbon and takes a shell-and-tube type heat exchanger form having a plurality of tubes, which comprises a heating section as an upper section and a cooling section as a lower section, the upper section and the lower section being communicated with each other.

Adsorbed activated carbon 1 is charged into an upper hopper section I at the top of the apparatus A through a sealing valve 8, and then into a distribution section II provided with an inert gas inlet 2 for introducing an inert gas, where the adsorbed activated carbon is brought into direct contact with the inert gas. Then, the adsorbed activated carbon and the inert gas are together distributed from the distribution section II into tubes of the heating section III, where a heated gas is introduced from a heated gas inlet 4 into the shell side of the heating section III, passed through the shell side upwards, i.e. in a counterflow-direction to the downwards moving direction of the adsorbed activated carbon to heat the tubes of the heating section III, i.e. the adsorbed activated carbon, and discharged from a heated gas outlet 15. The desorbed activated carbon is led to an inert gas-activated carbon separation section IV and the separated inert gas containing dioxin decomposition products is discharged from an inert gas outlet 3. The desorbed activated carbon is distributed into tubes of a cooling section V, where cooling water is led to the shell side of the cooling section V from a cooling water inlet 6 to indirectly cool the tubes, i.e. the desorbed activated carbon, and discharged from a cooling water outlet 7. The cooled desorbed activated carbon is led to a lower hopper section IV at the bottom of the apparatus A and discharged through a roll feeder 10 and a sealing valve 9.

That is, the adsorbed activated carbon 1 fed to the heating section III together with the inert gas having a function to help easy decomposition of dioxins, led from the inert gas inlet 2, is heated to at least 350°C by the heated gas fed to the shell side of the heating section VI. The discharge rate of the roll feeder 10 is so set that the descending adsorbed activated carbon 1 can pass through the heating section held at least at 350°C for at least one hour, whereby the adsorbed dioxins are thermally decomposed and desorbed from the activated carbon and the desorbed decomposition product gas is discharged from the inert gas outlet 3 together with the inert gas. The desorbed activated carbon is cooled through the tubes of the cooling section V and discharged at the constant rate through the roll feeder 10 at the bottom of the lower hopper section VI and discharged from the sealing valve 9. The discharged activated carbon is cooled to room temperature and reutilized.

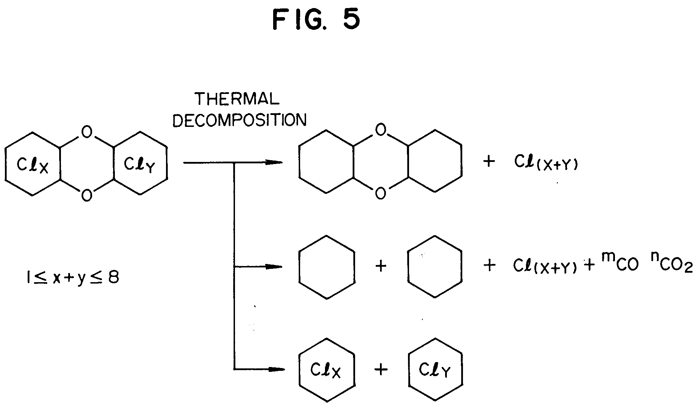

Usually, dioxins are decomposed only at a high temperature, e.g. 1,300°C, but when a larger amount of activated carbon or activated cokes is present than the amount of dioxines, the activated carbon or activated cokes works as an effective catalyst to cut off the link between two benzene rings of dioxins (Fig. 5). It seems ideal that there is no oxygen at the heated state, but in this example, an inert gas atmosphere at an oxygen concentration of not more than 1% by volume is used from the practical viewpoint, where the dioxins can be thermally decomposed substantially completely.

The apparatus A' shown in Fig. 2 has the same structure as that of the apparatus A shown in Fig. 1, where only the difference from the structure shown in Fig. 1 is that an inert gas inlet 2 is provided at the position of the inert gas outlet 3 of Fig. 1 and an inert gas outlet 3 is provided at the position of the inert gas inlet 3 of Fig. 1, that is, the inert gas is made to flow in the counterflow direction, i.e. upward direction, to the moving direction, i.e. downward direction, of the adsorbed activated carbon, while keeping direct contact with the descending adsorbed activated carbon. Similar effect can be obtained as in the case of Fig. 1.

### Example 2

This example shows that dioxins are thermally decomposed by heating dioxins-adsorbed activated carbon or activated cokes, on which HCl and SO₂ are also adsorbed at the same time (the dioxins-adsorbed activated carbon or activated cokes will be hereinafter referred to merely as "adsorbed activated carbon") in an oxygen-free state in the absence of an inert gas at a low temperature such as at least 350°C for about one hour or more.

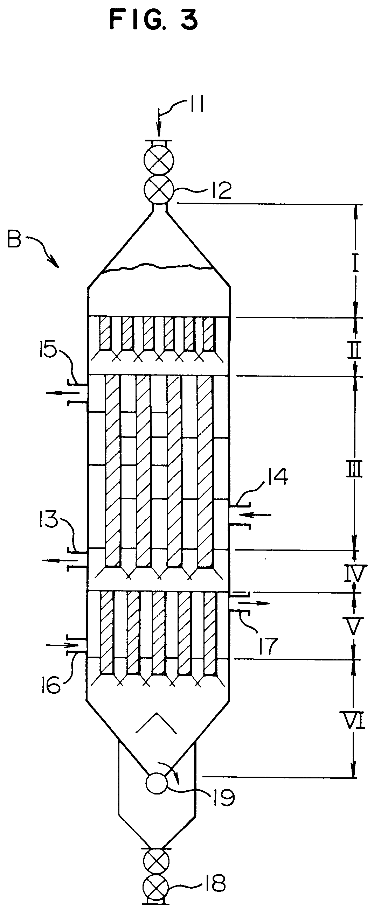

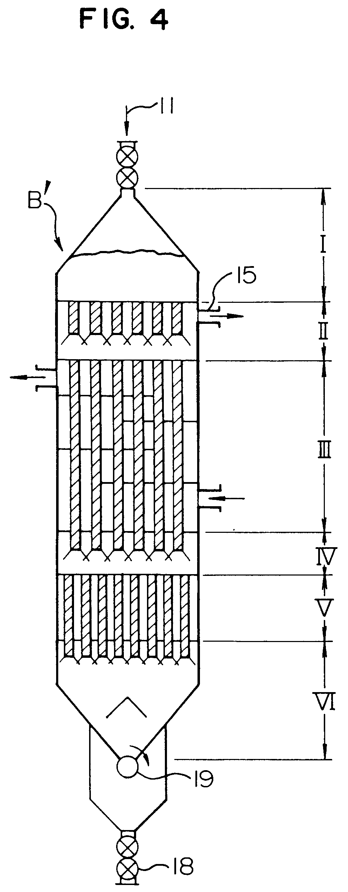

In this example, as in Example 1, the adsorbed dioxins can be thermally decomposed at such a low temperature, and the adsorbed activated carbon can be reutilized and the adsorbed dioxins can be made harmless with less energy consumption and much saving of resource. Figs. 3 and 4 show apparatuses for carrying out the present process disclosed in this example, where Fig. 3 shows an apparatus B for decomposing adsorbed dioxins in an oxygen-free state in absence of an inert gas, while withdrawing the decomposition product gas in the same direction as the moving direction of the activated carbon while keeping direct contact with the adsorbed activated carbon, and Fig. 4 shows an apparatus B' of the same structure as shown in Fig. 3, where only the difference from Fig. 3 is in withdrawing the decomposition product gas in a counterflow direction to the moving direction of the adsorbed carbon while keeping direct contact with the activated carbon.

The apparatus B for decomposing adsorbed dioxins shown in Fig. 3 is of a moving bed type as to the adsorbed activated carbon and takes a shell-and-tube type heat exchanger form having a plurality of tubes, which comprises a heating section as an upper section and a cooling section as a lower section, the upper section and the lower section being communicated with each other.

Adsorbed activated carbon 11 is charged into an upper hopper section I at the top of the apparatus B through a sealing valve 12, and then into a distribution section II to distribute the adsorbed activated carbon from the distribution section II into tubes of the heating section III, where a heated gas is introduced from a heated gas inlet 14 into the shell side of the heating section III, passed through the shell side upwards, i.e., in a counterflow direction, to the downwards moving direction of the adsorbed activated carbon to heat the tubes of the heating section III, i.e. the adsorbed activated carbon, and discharged from a heated gas outlet 15. The desorbed activated carbon is distributed into tubes of a cooling section V, where cooling water is led to the shell side of the cooling section V from a cooling water inlet 16 to indirectly cool the tubes, i.e. the desorbed activated carbon, and discharged from a cooling water outlet 17. The cooled desorbed activated carbon is led to a lower hopper section IV at the bottom of the apparatus B and discharged through a roll feeder 19 and a sealing valve 18.

That is, the adsorbed activated carbon 11 fed to the heating section III is heated to at least 350°C by the heated gas fed to the shell side of the heating section III. The discharge rate of the roll feeder 19 is so set that the descending adsorbed activated carbon 11 can pass through the heating section held at least at 350°C for at least one hour, whereby the adsorbed dioxins, SO₂ and HCl are thermally decomposed and desorbed from the activated carbon and the desorbed decomposition product gas, i.e. gases generated in an oxygen-free state, is discharged from a desorbed decomposition product gas outlet 13 provided in a gas-desorbed activated carbon separation section IV. The desorbed activated carbon is indirectly cooled through the tubes of the cooling section V by the cooling water and discharged at a constant rate through the roll feeder 19 at the bottom of the lower hopper section VI and discharged from the sealing valve 18. The discharged activated carbon is cooled to room temperature and reutilized.

The apparatus B' shown in Fig. 4 has the same structure as that of the apparatus B shown in Fig. 3, where only the difference from the structure shown in Fig. 3 is that a desorbed decomposition product gas outlet 15 is provided at the distribution section II in contrast to the desorbed decomposition product gas outlet 13 of Fig. 3, which is provided in the gas-desorbed activated carbon separation section IV. Similar effect can be obtained as in the case of Fig. 4.

### Example 3

A combustion flue gas containing 150 to 200 ppm of SO₂ and 20 to 50 ng/m² of dioxins at a temperature of 120 to 160°C was brought into contact with granular activated cokes having an average particle size of about 8 mm for about 100 hours to remove most of SO₂ and dioxins from the combustion flue gas. The resulting SO₂ and dioxins-adsorbed activated cokes were led to the upper hopper section I of an apparatus A of Fig. 1, for decomposing the adsorbed dioxins, kept at a super-atmospheric pressure to some degrees through a sealing valve 8. A combustion gas having an oxygen concentration of not more than 1% by volume at a temperature of about 300°C, obtained by combustion of kerosine, was led into the distribution section II as an inert gas through an inert gas inlet 2 and brought into direct contact with the adsorbed activated cokes therein. Then, the adsorbed activated cokes and the inert gas were together distributed from the distribution section II into tubes of the heating section III, and heated to about 390°C from the shell side, while descending together with the inert gas through the tubes. In the heating section III, the adsorbed SO₂ was desorbed from the activated cokes and the adsorbed dioxins were thermally decomposed. The thus regenerated activated cokes were led to the inert gas-activated cokes separation section IV and the separated inert gas containing SO₂ and dioxin decomposition product was discharged from an inert gas outlet 3. The regenerated activated cokes were distributed into tubes of cooling section V and cooled through indirect heat exchange with cooling water passing through the shell side, and the cooled activated cokes were discharged to the outside at about 140°C through the lower hopper section IV, a roll feeder 10 and a sealing valve 9. The cooling water was used at a non-boiling temperature and the atmospheric pressure.

The regenerated activated cokes and the discharged inert gas were analyzed and it was found that both had a dioxin concentration of less than 1% on the basis of the concentration of dioxins adsorbed on the fed activated cokes, and more than 99% of the dioxins was thermally decomposed.

In the present invention, dioxins-adsorbed activated carbon or activated cokes is heated in an oxygen-free state or in an inert atmosphere at an oxygen concentration of not more than 1% by volume in a reactor filled with the adsorbed activated carbon or activated cokes at least at 350°C for a least one hour, thereby thermally decomposing the adsorbed dioxins at such a low temperature. In contrast to the conventional process for thermally decomposing adsorbed dioxins at such a high temperature as 1,300°C to combust the adsorbed activated carbon or activated cokes, the present process can reduce energy consumption considerably and also can reduce chances for forming dioxins again due to combustion of the activated carbon or activated cokes at such a high temperature.

## Claims

1. A process for thermally decomposing adsorbed dioxins, which comprising heating dioxins-adsorbed activated carbon or activated cokes in an oxygen-free state in a reactor filled with the adsorbed activated carbon or activated cokes at least at 350°C for at least one hour.

2. A process for thermally decomposing adsorbed dioxins, which comprises heating dioxins-adsorbed activated carbon or activated cokes in a reactor filled with the adsorbed activated carbon or activated cokes in an inert atmosphere at an oxygen concentration of not more than 1% by volume at least at 350°C for at least one hour.

3. A process according to Claim 2, wherein an inert gas for the inert atmosphere is passed in the same flow direction as the moving direction of the adsorbed activated carbon or activated cokes.

4. A process according to Claim 2, wherein an inert gas for the inert atmosphere is passed in an countercurrent flow direction to the moving direction of the adsorbed activated carbon or activated cokes.
